(19) Europäisches Patentamt

European Patent Office

Office européen des brevets

(11) EP 0 947 851 A2

(12) EUROPÄISCHE PATENTANMELDUNG

(43) Veröffentlichungstag:
06.10.1999 Patentblatt 1999/40

(51) Int. Cl.⁶: G01S 7/41

(21) Anmeldenummer: 99106520.2

(22) Anmeldetag: 30.03.1999

(84) Benannte Vertragsstaaten:
AT BE CH CY DE DK ES FI FR GB GR IE IT LI LU
MC NL PT SE
Benannte Erstreckungsstaaten:
AL LT LV MK RO SI

(30) Priorität: 02.04.1998 DE 19814776

(71) Anmelder:
DaimlerChrysler Aerospace AG
81663 München (DE)

(72) Erfinder:
• Hommel, Hans
  88455 Baindt (DE)
• Mühlhäuser, Werner
  89150 Laichingen (DE)
• Schroer, Wolfgang
  89081 Ulm (DE)

(54) Verfahren zur Klassifikation und/oder Identifikation eines Zieles

(57) Die Erfindung betrifft ein Verfahren zur Klassifikation und/oder Identifikation eines (Radar-)Zieles, insbesondere eines Flugzeuges, mittels einer räumlich hochauflösenden Radaranlage. Mit dieser können die vorhandenen (typischen) (Radar-)Streuzentren detektiert werden, so daß im Videobereich ein Ziel-Amplitudensignal entsteht, das im allgemeinen mehrere Amplitudenmaxima, die jeweils einem Streuzentrum entsprechen, enthält. Diese Ziel-Amplitudensignal wird mittels der Fuzzy-Set-Theorie mit mehreren vorgebbaren Referenz-Amplitudensignalen, die vorgebbaren Flugzeugtypen sowie vorgebbaren Fluglagen (Aspektwinkeln) zugeordnet sind, verglichen. Anhand dieses Vergleiches wird der Flugzeugtyp, welcher dem Ziel-Amplitudensignal entspricht, festgelegt.

Fig. 1

## Beschreibung

Die Erfindung geht aus von einem Verfahren zur Klassifikation und/oder Identifikation eines Zieles nach dem Oberbegriff des Patentanspruchs 1.

Die Erfindung ist insbesondere anwendbar zur Klassifikation und/oder Identifikation von Flugzeugen. Diese können mittels einer räumlich hochauflösenden Radaranlage, beispielsweise einer Pulsradaranlage, derart erfaßt werden, das die zu einem (Radar-)Ziel gehörenden (Radar-)Streuzentren, die beispielsweise von den Enden der Tragflächen, den Leitwerken und/oder den Triebwerken herrühren, räumlich getrennt erscheinen, beispielsweise auf einem Radarschirm. Es ist ersichtlich, daß zu jedem Flugzeugtyp ein diesen kennzeichnender Satz von (Radar-)Streuzentren gehört. Beispielsweise gehört zu einem kleinen einmotorigem Sportflugzeug ein wesentlich anderer Satz von (Radar-)Streuzentren als zu einem großen viermotorigem (Düsen-)Verkehrsflugzeug. Für jeden interessierenden Flugzeugtyp ist nun die zugehörige (relative) räumliche Lage der (Radar-)Streuzentren bekannt oder kann meßtechnisch ermittelt und gespeichert werden.

Wird nun von einer hochauflösenden Radaranlage ein zunächst unbekanntes (Radar-)Ziel erfaßt, so können von diesem die Anzahl und die räumliche Lage der (Radar-)Streuzentren ermittelt werden, so daß ein Ziel-Streuzentren-Muster entsteht. Dieses kann auf einem (Radar-)Sichtschirm dargestellt werden und anschließend mit den gespeicherten Referenz-Streuzentren-Mustern verglichen werden. Dieser Vergleich erfolgt im allgemeinen durch eine hochqualifizierte Bedienperson. Ist eine Übereinstimmung vorhanden von einem Referenz-Streuzentren-Muster mit dem Ziel-Streuzentren-Muster, so wird diesem derjenige Flugzeugtyp, der zu dem Referenz-Streuzentren-Muster gehört, zugeordnet. Das (Radar-) Ziel ist damit klassifiziert und/oder identifiziert.

Eine derartige Auswertung wird nun im allgemeinen dadurch erschwert oder sogar verhindert, daß die räumliche Lage (der sogenannte Aspektwinkel) des Zieles bezüglich der Erfassungsrichtung, die auch mit dem englischen Fachausdruck "Line Of Sight" (LOS) bezeichnet wird, nicht bekannt ist. Denn aus der Sicht der Radaranlage können sich bei unbekannter räumlicher Lage des Zieles, beispielsweise bei einem Kurvenflug eines Flugzeuges, einige Streuzentren überdecken und/oder einen sich zeitlich ändernden (relativen) Abstand vortäuschen.

Der Erfindung liegt die Aufgabe zugrunde, ein gattungsgemäßes Verfahren anzugeben, mit dem, insbesondere bei Flugzeugen, eine zuverlässige Klassifikation und/oder Identifikation ermöglicht wird auch bei einer unbekannten räumlichen Lage des von der Radaranlage erfaßten Zieles.

Diese Aufgabe wird gelöst durch die in dem kennzeichnenden Teil des Patentanspruchs 1 angegebenen Merkmale. Vorteilhafte Ausgestaltungen und/oder Weiterbildungen sind den weiteren Ansprüchen entnehmbar.

Die Erfindung wird im folgenden anhand von Ausführungsbeispielen, die sich auf die Klassifikation und/oder Identifikation von fliegenden Flugzeugen beziehen, näher erläutert unter Bezugnahme auf schematisch dargestellte Figuren. Es zeigen

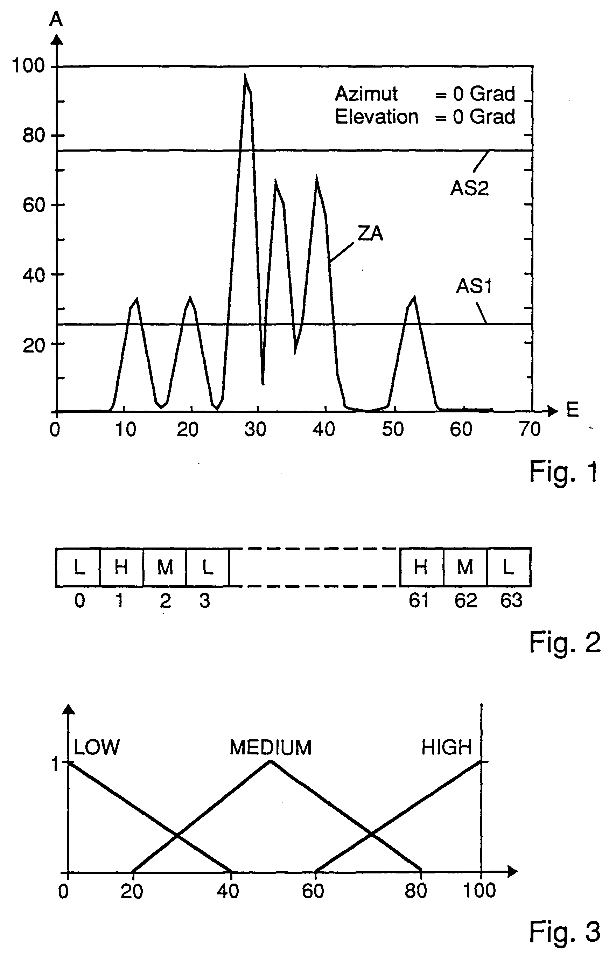

Fig. 1 bis Fig.3      schematisch dargestellte Diagramme zur Er läuterung der Erfindung.

Bei der Erfindung wird eine räumlich hochauflösende Radaranlage verwendet, beispielsweise eine an sich bekannte Pulsradaranlage mit einer derart hohen Pulswiederholfrequenz (PRF), daß lediglich ein vorgebbar kleiner Entfernungs-Eindeutigkeitsbereich entsteht. Dieser umfaßt beispielsweise lediglich einen Enfernungsbereich von einigen Flugzeuglängen. Die von einem (Radar-)Ziel, beispielsweise einem Flugzeug, reflektierten Echosignale werden nun in an sich bekannter Weise empfangen, demoduliert und in den Videobereich umgesetzt. Dort entsteht ein vorzugsweise digitalisiertes Videosignal (Ziel-Amplitudensignal).

Fig.1 zeigt ein solches Ziel-Amplitudensignal ZA (ausgezogene Kurve) für ein einziges Flugzeug. In Fig.1 ist eine normierte Amplitude A (Ordinate) in Abhängigkeit von der Entfernung E (Abszisse) aufgetragen. Die Entfernung E ist dabei in willkürlichen Enfernungs-Einheiten dargestellt derart, daß das Flugzeug in seiner vollständigen Länge erfaßt wird. Die von den (Radar-)Streuzentren herrührenden Amplitudenwerte sind normiert dargestellt derart, daß der größte Amplitudenwert (hier ungefähr bei dem Entfernungswert 28) im wesentlichen dem normierten Amplitudenwert 100 entspricht. In dem dargestellten Beispiel wird das Flugzeug unter vorgebbaren Winkeln, dem Azimutwinkel 0° und dem Elevationswinkel 0°, betrachtet. Die in Fig.1 dargestellten Amplitudenspitzen (Maxima) entsprechen den markanten (Radar-)Streuzentren des Flugzeuges. Es ist ersichtlich, daß eine Klassifikation und/oder Identifikation anhand der Ziel-Amplitudenwerte, insbesondere der Maxima, und/oder anhand der relativen Entfernung (relativer Abstand) der Amplitudenspitzen (Maxima) erfolgen kann.

Im folgenden wird eine Klassifikation und/oder Identifikation anhand der normierten Amplitudenwerte unter Verwendung der an sich bekannten Fuzzy-Set-Theorie beschrieben. Dazu ist eine Merkmals-Extraktion für die Ermittlung der sogenannte Amplituden-Regelbasis erforderlich. Diese wird dadurch gebildet, daß zunächst zwei Amplituden-Schwellwerte AS1, AS2 bestimmt werden, beispielsweise anhand empirischer Meßwerte. In dem Beispiel ist AS1 = 25 und AS2 = 75. Alle Amplitudenwerte im (Amplituden-)Bereich von 0 bis 25 werden dem (Fuzzy-)Merkmal "LOW" (L) zugeordnet, alle Amplitudenwerte im (Amplituden-)Bereich von 26 bis 75 dem (Fuzzy-)Merkmal "MEDIUM" (M) und alle Amplitudenwerte im (Amplituden-)Bereich von 76 bis 100 dem (Fuzzy-)Merkmal "HIGH" (H). In Fig.1 ist also jeder Amplitudenwert eindeutig gekennzeichnet durch einen Entfernungswert, der im Entfernungsbereich von 0 bis 64 liegen kann, und einem (Fuzzy-)Amplitudenmerkmal, das die Werte "LOW" (L), "MEDIUM" (M) oder "HIGH" (H) annehmen kann.

Die in Fig.1 dargestellte Kurve ZA eines unbekannten Flugzeugs ist daher entsprechend Fig.2 darstellbar als (Fuzzy-)ZielAmplituden-Regelbasis, die 64 Werte (Entfernungs-Segmente) umfaßt. Dabei sind die in Fig.2 dargestellten Merkmale lediglich aus Gründen der Klarheit willkürlich gewählt und entsprechen nicht den Amplitudenwerten der Fig.1.

Es ist nun zweckmäßig, für jeden möglichen (Referenz-)Flugzeugtyp und für jede mögliche (Referenz-)Ansicht (Aspektwinkel) eine Referenz-Amplituden-Regelbasis entsprechend Fig.2 zu erstellen und zu speichern. Dieses kann anhand von empirischen Auswertungen und/oder mittels geeigneter Programme für Datenverarbeitungsanlagen erfolgen.

Zur Klassifikation und/oder Identifikation wird nun die Ziel-Amplituden-Regelbasis mit den Referenz-Amplituden-Regelbasen verglichen und diejenige ausgewählt, bei welcher der beste Übereinstimmungsgrad vorhanden ist. Der zu der ausgewählten Referenz-Amplituden-Regelbasis gehörende Flugzeugtyp wird dann ausgewählt und als zu der Ziel-Amplituden-Regelbasis gehörend festgelegt.

Zu einer genauen Ermittlung des Übereinstimmungsgrades ist es zunächst notwendig, für alle normierten Amplitudenwerte eine sogenannte Membership-Funktion (Mitglieder-Funktion) zu bestimmen. Diese wird zweckmäßigerweise als lineare Funktion (Dreiecks-Funktion) entsprechend Fig.3 gewählt.

Hat nun beispielsweise eine Referenz-Amplituden-Regelbasis eine aus 64 Zugehörigkeitswerten bestehende Merkmalsanordnung entsprechend der Darstellung

$$L \; L \; L \; M \; .... \qquad (1)$$

und gehören beispielsweise zu der Ziel-Amplituden-Regelbasis die 64 normierten Amplitudenwerte entsprechend der Darstellung

$$20 \; 10 \; 35 \; 50 \; .... \; , \qquad (2)$$

so ergeben sich, aufgrund der linearen Zusammenhänge entsprechend Fig.3, die Übereinstimmungsgrade entsprechend der Darstellung

$$0{,}6 \; 0{,}8 \; 0{,}1 \; 1{,}0 \; ... \; . \qquad (3)$$

Dabei bestimmt der Eintrag eines Zugehörigkeitswertes (L, M, H) in die Referenz-Amplituden-Regelbasis, auf welche Kurve der Membership-Funktion (Fig.3) ein normierter Amplitudenwert der Ziel-Amplituden-Regelbasis (Zielmuster) (Darstellung (2)) bezogen werden muß.

Die Übereinstimmungsgrade entsprechend Darstellung (3) werden nun mittels eines sogenannten Fuzzy-Operators zu einem einzigen Wert, dem sogenannten Übereinstimmungsmaß, zusammengefaßt. Dieses gibt die Übereinstimmung an mit der gewählten Referenz-Amplituden-Regelbasis entsprechend Darstellung (1).

Ein solches Übereinstimmungsmaß, dessen Wert zwischen den Werten 0 und 1 liegt, wird nun für jede der vorhandenen Referenz-Amplituden-Regelbasen ermittelt. Anschließend wird diejenige Referenz-Amplituden-Regelbasis, zu welcher das größte Übereinstimmungsmaß gehört, ausgewählt und der zu dieser gehörende Flugzeugtyp ermittelt. Dieser gehört dann auch zu der Ziel-Amplituden-Regelbasis, so daß die Klassifikation und/oder Identifikation anhand der Amplitudenwerte (Fig.1) abgeschlossen ist.

Die Entscheidung, welcher Fuzzy-Operator für die Ermittlung des Übereinstimmungsmaßes gewählt wird, ist abhängig von dem Signal-Rausch-Verhältnis, das vorhanden ist bei der Ermittlung des Amplitudenverlaufes entsprechend Fig.1 (Kurve ZA). Ein solches Signal-Rausch-Verhältnis ist in an sich bekannter Weise meßbar.

Ist beispielsweise ein vorgebbar hohes Signal-Rausch-Verhältnis vorhanden, so wird als Fuzzy-Operator der sogenannte Fuzzy-Minimum-Operator (Fuzzy-AND-Operator) gewählt.

Ist dagegen ein vorgebbar mittleres Signal-Rausch-Verhältnis vorhanden, so wird als Fuzzy-Operator ebenfalls der Fuzzy-Minimum-Operator gewählt, aber es wird zusätzlich eine vorgebbare Gewichtung der Übereinstimmungsgrade und/oder des Übereinstimmungsmaßes vorgenommen mittels eines vorgebbaren Gewichtungsfaktors kleiner eins. Dieser ist beispielsweise anhand von Erfahrungs- und/oder Meßwerten ermittelbar.

Soll nun die Klassifikation und/oder Identifikation mit einer besonders hohen Zuverlässigkeit erfolgen, so ist es vorteilhaft, zusätzlich zu dem beschriebenen Verfahren ein Übereinstimmungsmaß für die Entfernungs-Abstände der Amplitudenspitzen (Maxima) zu ermitteln. Dazu werden zunächst die zu den Amplitudenspitzen gehörenden Entfernungswerte ermittelt, beispielsweise aus einem Diagramm entsprechend Fig.1. Für alle Amplitudenspitzen, deren zugehörige Amplitudenwerte ebenfalls ermittelt werden, werden anschließend durch eine Differenzbildung die zugehörigen Entfernungs-Abstände ermittelt, wobei beispielsweise der zu der größten Amplitudenspitze gehörende Entfernungswert als (Entfernungs-)Referenzwert (Bezugspunkt) gewählt wird. Die Amplitudenspitzen können nun der Größe nach, das heißt, entsprechend ihren Amplitudenwerten geordnet werden. Damit sind eine Ziel-Entfernungs-Regelbasis sowie Referenz-Entfernungs-Regelbasen ermittelbar entsprechend Fig.2. Damit können, entsprechend dem beschriebenen Verfahren, Übereinstimmungsmaße für die Entfernungs-Abstände ermittelt werden.

Aus den größten Übereinstimmungsmaßen für die Amplitudenwerte und die Entfernungs-Abstände wird dann in vorgebbarer Weise, beispielsweise mittels einer zusätzlichen vorgebbaren Gewichtung, ein Gesamt-Übereinsimmungsmaß ermittelt und aus diesem der Flugzeugtyp ermittelt.

Die Erfindung ist nicht auf die beschriebenen Ausführungsbeispiele beschränkt, sondern sinngemäß auf weitere anwendbar, beispielsweise auf sogenannte zweidimensionale Amplituden-Entfernungsmuster entsprechend dem sogenannten ISAR-Verfahren ("Invers Synthetic Aperture Radar"). Bei diesem werden im Gegensatz zu dem eindimensionalen Amplituden-Entfernungsmuster entsprechend Fig.1, in welcher die Amplitudenwerte in Abhängigkeit von der (eindimensionalen) Entfernung, die der englischen Literatur auch mit "range" bezeichnet wird, dargestellt sind, die Amplitudenwerte in Abhängigkeit von einer Art zweidimensionalen Entfernung dargestellt, nämlich der bereits bekannten Entfernung ("range") und der dazu senkrechten Entfernung, die in der englischen Literatur auch mit "crossrange" bezeichnet wird.

Weiterhin ist die Erfindung beispielsweise anwendbar auf die Klassifikation und/oder Identifikation von erdgebundenen Fahrzeugen, beispielsweise Schiffen und/oder Landfahrzeugen, denn diese sind ebenfalls anhand von typischen (Radar-)Streuzentren voneinander unterscheidbar.

**Patentansprüche**

1. Verfahren zur Klassifikation und/oder Identifikation eines Zieles mittels einer Radaranlage, wobei

   - die räumliche Auflösung derart gewählt wird, daß bei dem Ziel die dieses kennzeichnenden (Radar-)Streuzentren einzeln detektiert werden,

   - die von den Streuzentren eines Zieles reflektierten Echoimpulse in den Videobereich umgesetzt werden derart, daß dort ein zumindest von der Entfernung abhängiges Ziel-Amplitudensignal entsteht, welches die Streuzentren des Zieles darstellt,

   - das Ziel-Amplitudensignal mit mindestens einem Referenz-Amplitudensignal, das einem bekanntem Referenz-Ziel entspricht, verglichen wird und

   - anhand des Vergleiches entschieden wird, ob eine Übereinstimmung zwischen dem Ziel und dem Referenz-Ziel vorhanden ist, dadurch gekennzeichnet,

   - daß das Ziel-Amplitudensignal (ZA) in eine vorgebbare Anzahl von Entfernungs-Segmente unterteilt wird,

   - daß aus dem Ziel-Amplitudensignal (ZA) für jedes Entfernungs-Segment der zugehörige Amplitudenwert ermittelt wird,

   - daß der zu einem Entfernungs-Segment gehörende Amplitudenwert entsprechend der Fuzzy-Set-Theorie in vorgebbarer Weise einem Fuzzy-Set (L, M, H) zugeordnet wird, so daß eine dem Ziel-Amplitudensignal (ZA) entsprechende Ziel-Amplituden-Regelbasis entsteht,

   - daß für eine vorgebbare Anzahl unterschiedlicher Referenz-Amplitudensignale, die mindestens einem bekanntem Referenz-Ziel entsprechen, entsprechend der Fuzzy-Set-Theorie die jeweils zugehörigen Referenz-Amplituden-Regelbasen ermittelt werden,

   - daß die Ziel-Amplituden-Regelbasis mit den Referenz-Amplituden-Regelbasen entsprechend der Fuzzy-Set-Theorie in vorgebbarer Weise verglichen werden und

   - daß bei einer Übereinstimmung einer Referenz-Amplituden-Regelbasis mit der Ziel-Amplituden-Regelbasis dieser dasjenige Ziel, das zu der Referenz-Amplituden-Regelbasis gehört, zugeordnet wird.

2. Verfahren zur Klassifikation und/oder Identifikation eines Zieles nach Anspruch 1, dadurch gekennzeichnet,

   - daß das Ziel-Amplitudensignal (ZA) normiert wird derart, daß der größte Amplitudenwert als Bezugswert (100%) gewählt wird und

   - daß die Anzahl der Entfernungs-Segmente derart gewählt wird, daß das zu klassifizierende und/oder identifizierende Ziel im Entfernungsbereich in der vollen Länge erfaßt wird.

3. Verfahren zur Klassifikation und/oder Identifikation eines Zieles nach einem der vorhergehenden Ansprüche, dadurch gekennzeichnet, daß die Ziel-Amplituden-Regelbasis mit allen Referenz-Amplituden-Regelbasen dadurch verglichen wird,

   - daß für die jedem Entfernungs-Segment der Ziel-Amplituden-Regelbasis zugeordneten Amplitudenwerte mittels einer vorgebbaren Membership-Funktion jeweils ein Übereinstimmungsgrad ermittelt wird bezüglich eines Fuzzy-Bereiches (L, M, H) des entsprechenden Entfernungs-Segmentes in einer vorgebbaren Referenz-Amplituden-Regelbasis,

- daß aus allen Übereinstimmungsgraden ein zu der vorgegebenen Referenz-Amplituden-Regelbasis gehörendes Übereinstimmungsmaß ermittelt wird mittels eines vorgebbaren Fuzzy-Operators,

- daß die zu dem größten Übereinstimmungsmaß gehörende Referenz-Amplituden-Regelbasis ausgewählt wird und

- daß das zu dieser ausgewählten Referenz-Amplituden-Regelbasis gehörende Referenz-Ziel als zu der Ziel-Amplituden-Regelbasis gehörend festgesetzt wird.

4. Verfahren zur Klassifikation und/oder Identifikation eines Zieles nach einem der vorhergehenden Ansprüche, dadurch gekennzeichnet,

- daß in dem Ziel-Amplitudensignal (ZA) zu jedem Amplitudenmaximum das zugehörige Entfernungs-Segment ermittelt wird und daraus eine Ziel-Entfernungs-Regelbasis gebildet wird,

- daß zu jedem möglichen Referenz-Ziel eine Referenz-Entfernungs-Regelbasis gebildet wird,

- daß die Ziel-Entfernungs-Regelbasis mit jeder der Referenz-Entfernungs-Regelbasen entsprechend der Fuzzy-Set-Theorie verglichen wird und

- daß bei einer Übereinstimmung der Ziel-Entfernungs-Regelbasis mit einer Referenz-Entfernungs-Regelbasis das zugehörige Referenz-Ziel als zu der Ziel-Entfernungs-Regelbasis gehörend festgesetzt wird.

5. Verfahren zur Klassifikation und/oder Identifikation eines Zieles nach einem der vorhergehenden Ansprüche, dadurch gekennzeichnet, daß der Fuzzy-Operator in Abhängigkeit von dem in dem Ziel-Amplitudensignal (ZA) vorhandenen Signal-Rausch-Verhältnis gewählt wird.

6. Verfahren zur Klassifikation und/oder Identifikation eines Zieles nach einem der vorhergehenden Ansprüche, dadurch gekennzeichnet, daß bei einem in dem Ziel-Amplitudensignal (ZA) vorhandenen vorgebbar hohem Signal-Rausch-Verhältnis als Fuzzy-Operator der Fuzzy-Minimum-Operator gewählt wird.

7. Verfahren zur Klassifikation und/oder Identifikation eines Zieles nach einem der vorhergehenden Ansprüche, dadurch gekennzeichnet, daß bei einem in dem Ziel-Amplitudensignal (ZA) vorhandenen vorgebbar mittleren Signal-Rausch-Verhältnis als Fuzzy-Operator der Fuzzy-Minimum-Operator gewählt wird und eine vorgebbare zusätzliche Gewichtung des Übereinstimmungsgrades und/oder des Übereinstimmungsmaßes durchgeführt wird.

8. Verfahren zur Klassifikation und/oder Identifikation eines Zieles nach einem der vorhergehenden Ansprüche zur Verwendung bei der Klassifikation und/oder Identifikation eines Flugzeuges.

9. Verfahren zur Klassifikation und/oder Identifikation eines Zieles nach einem der vorhergehenden Ansprüche zur Verwendung bei der Klassifikation und/oder Identifikation eines erdgebundenen Fahrzeuges.

Fig. 1

Fig. 2

Fig. 3